# EUROPEAN PATENT APPLICATION

(11) **EP 0 667 112 A1**
(43) Date of publication of application: **16.08.1995**
(21) Application number: 95101605.4
(22) Date of filing: 07.02.1995
(51) Int. Cl.: A47J 43/26, A23N 5/00

(54) **Hydraulically-operated nutcracker**

(30) Priority: 10.02.1994 IT BO940052
(71) Applicant: Storani, Luca, I-40137 Bologna (IT)
(72) Inventor: Storani, Luca, I-40137 Bologna (IT)
(74) Representative: Modiano, Guido, Dr.-Ing.

(57) **Abstract**

A hydraulically-operated nutcracker which comprises a base (1) which accommodates a hydraulic jack composed of a cylindrical seat (2) for a piston (7) whose stem (10) has an end that lies outside the seat (2) and forms a moving jaw (11) that cooperates with a fixed jaw (16) to crack a nut interposed between the jaws; the piston (7) divides the seat (2) into two chambers (8,9): a first chamber (8), which is connected to a hydraulic pumping device (32-37) which is operated manually by means of a one-way valve (42,43) which is adapted to supply pressurized fluid to the jack; and a second chamber (9) which constitutes a reservoir at ambient pressure for containing the fluid and is connected to the device by means of a one-way valve (40,41) that is suitable to allow the recirculation of fluid towards the device during pumping.

## Description

The present invention relates to a hydraulically-operated nutcracker.

Hydraulically-operated nutcrackers are already known, for example from French patent no. 2,067,178. However, the effectiveness of these nutcrackers is highly inadequate due to the limited extent of the stroke for moving the jaws towards each other, which does not allow to compensate for size variations of the nuts; accordingly, with small nuts it is necessary to first of all move the jaws mutually closer mechanically in order to crack the nuts with the subsequent hydraulic actuation.

The aim of the present invention is therefore to provide a nutcracker that allows to obviate the drawbacks of conventional ones.

Within the scope of this aim, an object of the present invention is to provide a nutcracker that is highly flexible in use so that it can work on any kind of fruit having a hard shell.

This aim and this object are achieved by a hydraulically-operated nutcracker which is characterized in that it comprises a base which accommodates a hydraulic jack which is composed of a cylindrical seat for a piston whose stem has an end that lies outside said seat and forms a moving jaw that cooperates with a fixed jaw to crack a nut interposed between said jaws, said piston dividing said seat into two chambers, a first one of said chambers being connected to a hydraulic pumping device which is operated manually by means of a one-way valve which is adapted to supply pressurized fluid to said jack, the second chamber constituting a reservoir at ambient pressure for containing the fluid and being connected to said device by means of a one-way valve that is adapted to allow the recirculation of fluid towards said device during pumping.

Further characteristics of the present invention will become apparent from the following description of a preferred embodiment, illustrated only by way of non-limitative example in the accompanying drawings, wherein:

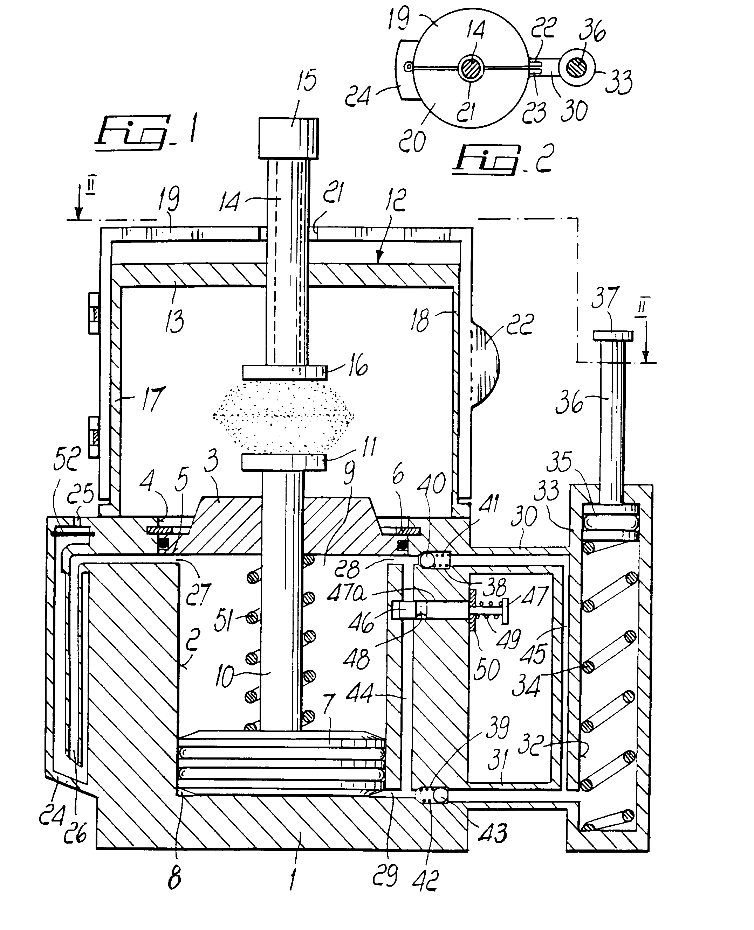

figure 1 is a partially schematic sectional view of the nutcracker; and
figure 2 is a reduced-scale top view of the nutcracker of figure 1.

With reference to the above figures, the nutcracker comprises a base 1 in which a cylindrical seat 2 for a hydraulic jack is formed; said seat has a vertical axis and is closed upward by a pan 3.

The pan 3 is hermetically centered in an enlarged region 4 of the seat 2 and is locked between a shoulder 5 and a retention ring 6.

A piston 7 is guided within the seat 2 and divides said seat into a lower chamber 8 and into an upper chamber 9.

A stem 10 protrudes axially from the piston 7, passes through the pan 3, and supports, at the end that lies outside the seat 2, a flange 11 which constitutes a support for the nut to be cracked.

A bracket 12 shaped like an inverted U is fixed to the upper face of the base 1 and has, in a central position of its upper cross-member 13, a threaded hole engaged by a shank 14 that is coaxial to the stem 10.

The shank 14 has an actuation knob 15 at its upper end and, at its lower end, a flange 16 which is arranged so as to face the flange 11. In practice, the flanges 11 and 16 constitute the jaws which, when actuated towards each other, break the shell of the nut.

Two mirror-symmetrical hood portions 19 and 20 are pivoted to one of the two vertical posts 17 and 18 of the bracket 12 and have, at the top, recesses 21 which allow the shank 14 to pass when the hood portions are mutually adjacent in closed position. In this position, the hood portions are held together by a retention device which is constituted by a permanent magnet 22 that is fixed to one hood portion and acts on a ferromagnetic element 23 which is fixed to the other hood portion.

A reservoir 24 is associated with the base 1 and is constantly connected to the outside environment by means of a hole 25. A tube 26 is located in the compartment 24, is open at the bottom, and is connected at the top, by means of a hole 27 that passes through the wall of the base 1, to the upper chamber 9 of the seat 2.

The upper chamber 9 and the lower chamber 8 of the seat 2 are furthermore connected, by means of respective through holes 28 and 29 of the base and by means of tubes 30 and 31, to the chamber 32 of a cylinder 33 in which a piston 35 can slide in contrast with the action of a return spring 34; said piston 35 is provided with a stem 36 that protrudes upward and ends with a button 37 for manual actuation.

An enlarged portion is formed in the hole 28 to accommodate a valve of the type composed of a ball 40 which is pushed by a spring 41. The valve 40 and 41 allows the flow of liquid from the chamber 9 towards the chamber 32.

A fully similar valve, composed of a ball 42 and of a spring 43, is accommodated in the hole 29. However, differently from the preceding valve, the valve 42, 43 allows flow from the chamber 32 towards the chamber 8.

The holes 28, 29 and the tubes 30, 31 form ducts which are connected to each other by channels 44 and 45 ahead and after the valves 40, 41 and 42, 43.

The channel 44 is normally closed by means of a shutter 46 which is provided with a corresponding actuation pushbutton 47.

The shutter 46 is guided in a seat 47 that passes through the channel 44 and has a groove 48. The shutter is kept in abutment against a shoulder 50 by means of a spring 49; said shutter closes the channel 44 at said shoulder. By acting on the pushbutton 47, the shutter is moved into the position in which the groove 48 faces the channel 44, allowing the fluid to pass.

The operation of the described nutcracker is as follows.

When inactive, the piston 7 rests on the bottom of the seat 2 and all the spaces are filled with an incompressible fluid (oil, water) substantially up to the level of the hole 28.

The pushbutton 37 is actuated after placing a nut between the jaws 11 and 16 and after closing the hood portions 19 and 20. The consequent descent of the piston 35 causes the pressurized fluid to be pumped from the chamber 32 into the lower chamber 8, through the valve 41 and 43, while fluid is simultaneously expelled from the chamber 9 into the collection reservoir 24. During this step, the valve 40 and 41 is kept in closed position by the delivery pressure produced by the piston 35. When the action on the pushbutton 37 ceases, the spring 34 moves the piston upward again, so that the valve 40, 41 opens while the valve 42, 43 closes. Accordingly, the fluid is drawn from the reservoir 24 through the chamber 9, the duct 5, 30, and the channel 45 into the chamber 32.

These steps to be repeated when the piston 35 is actuated again, producing a further upward stroke of the jaw 11.

In practice, the cylinder 32 and the base 1, together with the corresponding pistons 35 and 7, constitute two jacks which are coupled hydraulically so as to form a hydraulic press in which the pumping action applied by the piston 35 produces a compression force on the nut that breaks said nut.

It should be noted that the nut breaks in a controlled manner, so that it is possible to remove the shell and leave the kernel intact.

In order to return the nutcracker to the initial position, by acting on the pushbutton 47 the shutter 46 is moved into the position in which the holes 28 and 29 are mutually connected, thus allowing the fluid to flow from the chamber 8 into the chamber 9 as a consequence of the gravity-induced descent of the piston 7.

Optionally, if gravity is insufficient to overcome the sliding friction of the piston 7 and of the stem 10 it is possible to use a return spring 51 that acts between the piston 7 and the pan 3.

It is evident that the invention perfectly achieves the intended aim and objects. The cracking force that can be obtained is very intense, and therefore it is possible to crack nuts of any hardness with minimal effort.

Advantageously, when passing from a small nut (eg. hazelnuts) to a distinctly larger nut, it is possible to reduce the stroke of the piston 7 by screwing or unscrewing the shank 14 to move the jaw 16 to a distance from the jaw 11 that ensures that the nut is positioned and ensures quick action on it after a few pumping actions.

The hood portions 19 and 20 prevent any shell pieces from being ejected outward.

Numerous modifications and variations are possible in the practical embodiment of the invention, and all are within the scope of the inventive concept.

In particular, the cylinder 33 may be included in the base 1, so as to provide a single body which is more maneuverable and easier to transport.

In another embodiment of the invention, it is possible to arrange a membrane 52 made of elastic material, for example rubber, in the reservoir 24, directly below the hole 25; this membrane prevents the fluid from leaking out even if the nutcracker is overturned.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Hydraulically-operated nutcracker, characterized in that it comprises a base (1) which accommodates a hydraulic jack which is composed of a cylindrical seat (2) for a piston (7) whose stem (10) has an end that lies outside said seat and forms a moving jaw (11) that cooperates with a fixed jaw (16) to crack a nut interposed between said jaws, said piston (7) dividing said seat (2) into two chambers (8, 9), a first one (8) of said chambers being connected to a hydraulic pumping device (32-37) which is operated manually by means of a one-way valve (42, 43) which is adapted to supply pressurized fluid to said jack, the second chamber (9) constituting a reservoir at ambient pressure for containing the fluid and being connected to said device by means of a one-way valve (40, 41) that is suitable to allow the recirculation of fluid towards said device during pumping.

2. Nutcracker according to claim 1, characterized in that said second chamber (9) is connected to an external reservoir (24) which is connected to the outside environment.

3. Nutcracker according to claim 1 or 2, characterized in that said pumping device comprises a cylinder (33) inside which a manually actuated piston (35) can slide, said cylinder (33) being connected to said first chamber (8) and to said second chamber (9) by means of two ducts (30, 31) which are controlled by one-way valves (40-43).

4. Nutcracker according to claim 3, characterized in that said ducts (30, 31) are connected upstream and downstream of said one-way valves by two channels (44, 45), the channel (44) that connects said first chamber (8) to said second chamber (9) being controlled by a shutter (46) that can be actuated manually.

5. Nutcracker according to one of claims 1 to 4, characterized in that said fixed jaw (16) is rigidly coupled to a threaded shank (14) which is screwed into a bracket (12) which is mounted on said base (1) and is arranged opposite said moving jaw (11).

6. Nutcracker according to claim 5, characterized in that two hood portions (19, 20) are articulated to said bracket (12) and are adapted to form a compartment for containing said jaws (11, 16), said hood portions (19, 20) being provided with means (22, 23) for retaining them in closed position.

7. Nutcracker according to one of claims 2 to 6, characterized in that an elastic membrane (52) that is suitable to close the connection to the outside is provided in the reservoir (24).

8. Nutcracker according to claim 6, characterized in that said retention means (22, 23) are of the magnetic type.
